# DEMANDE DE BREVET EUROPEEN

(11) **EP 1 408 596 A1**
(43) Date de publication de la demande: **14.04.2004**
(21) Numéro de dépôt: 03364020.2
(22) Date de dépôt: 07.10.2003
(51) Int. Cl.: H02J 3/14

(54) **Gestion integrale de l'energie électrique par association d'un optimiseur et d'un automate de régulation**

(30) Priorité: 08.10.2002 FR 0212460
(71) Demandeur: Gourmelon, Christian, 35230 Orgères (FR)
(72) Inventeur: Gourmelon, Christian, 35230 Orgères (FR)

(57) **Abrégé**

Dispositif de Gestion Intégrale de l'Energie Electrique (GIEE) permettant, par association d'un optimiseur(2)et d'un automate de régulation(3) et, ou d'une supervision(4) de garantir la puissance souscrite auprès du fournisseur d'énergie (KW)ou de l'abaisser, et de réduire la consommation énergétique (kw/h) de l'ensemble des équipements d'un site industriel tertiaire. L'innovation est que l'on peut gérer des équipements de production de froid et, ou de climatisation en plus des équipements traditionnels et, ou de cuisson et, ou de chauffage et, ou d'éclairage.

Ce procédé s'applique plus particulièrement à l'hypermarché, et, ou aux grandes surfaces et, ou aux centres commerciaux et, ou à l'hôtellerie.

## Description

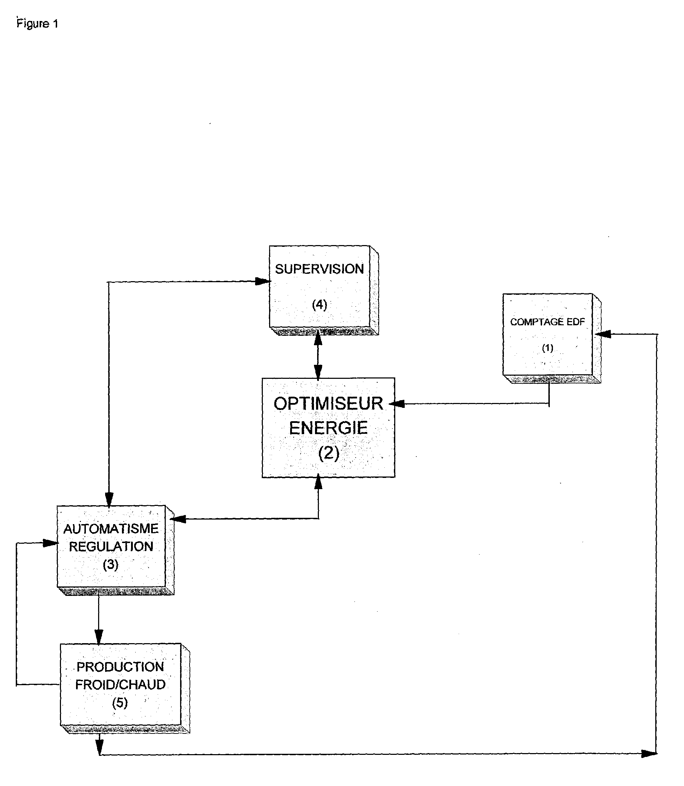

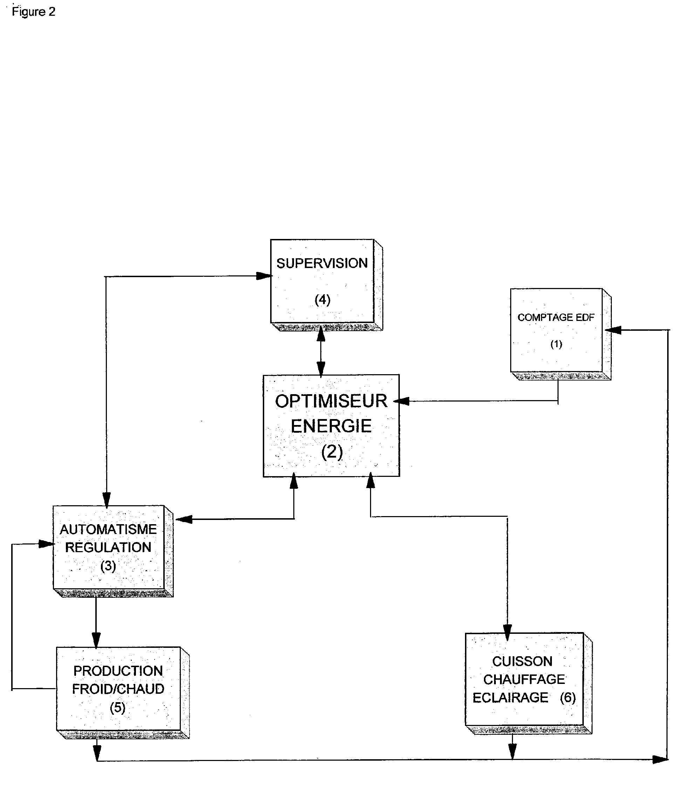

La présente innovation concerne la mise en oeuvre d'une Gestion Intégrale de l'Energie Electrique(GIEE) par l'association d'un optimiseur d'énergie(2) et d'une régulation intelligente(3) appliqué à la production de froid et, ou à la climatisation(5). figure 1
Ce procédé permet d'optimiser l'ensemble des process consommateurs d'énergie électrique : éclairage,et, ou appareil de cuisson,et, ou de chauffage(6) et, ou production de froid,et, ou de climatisation(5) sur un même site industriel ou tertiaire et plus particulièrement l'hypermarché, l'hôtellerie,et ,ou les centres commerciaux à titre d'exemple non limitatif .figure2

Un optimiseur d'énergie , de même que une GTC ou une GTB ne peut pas envoyer des ordres de délestage sur des compresseurs de fluides frigorigènes sans risque de casse lié au nombre de démarrage :
(a) surchauffe
(b) retour d'huile
(c) retour de gaz
(d) liquéfaction du gaz dans les cylindres

Le procédé consiste à associer un optimiseur d'énergie(2) et un automatisme de régulation(3) dite régulation intelligente.
L'automate de régulation(3) exécute les ordres émis par l'optimiseur(2), mais reste maître dans le pilotage des centrales.
Les caractéristiques techniques de ce procédé sont les suivantes:
- Ce dispositif permet la gestion de l'énergie électrique des équipements de production de froid, de climatisation, de cuisson, d'éclairage, de chauffage caractérisé en ce qu'il comporte l'association d'un optimiseur(2) ,d'un automate de régulation(3) ,d'une supervision(4), d'un comptage électronique(1)
- L'optimiseur(2) intègre 2 voies de comptage (énergie active et réactive) calée sur l'algorithme du comptage du compteur du fournisseur d'énergie(1) en temps réel à la seconde via le compteur (1) ,7 voies de comptage en temps réel à la seconde pour la production de froid(5),et, ou la climatisation(6),et, ou l'éclairage,et, ou les équipements électrique de boulangerie,et, ou de rôtisserie,et, ou de pizzéria, et, ou le chauffage(7),et, ou le groupe électrogène, le nombre de voie de comptage n'est pas limité et peut être étendu à d'autres installations consommatrices d'énergie électrique que l'on souhaite optimisées,
   l'optimiseur(2) gère le débit d'énergie et, ou empêche le redémarrage des équipements selon l'inertie et les priorités de fonctionnement, directement aux équipements de cuisson, d'éclairage et de chauffage(6), pour la production de froid et la climatisation(5), l'optimiseur envoie ses ordres au travers de l'automate de régulation de froid et,ou de climatisation, il peut y avoir un automate pour le froid et un automate pour la climatisation,
   les séquences d'optimisation sont fonctions de la charge instantanée mesurée et à venir dans une séquence de comptage(1) 10 minutes ,5 minutes ou 1 minute en fonction de la tarification du fournisseur dénergie électrique, le fonctionnement de l'optimiseur(2) et de l'automate de régulation(3) sont indissociable pour la gestion des équipements de production de froid, par une programmation réciproque bien déterminée.
- L'automate de régulation(3) exécute les ordres émis par l'optimiseur(2) mais reste maître dans le pilotage des centrales et intègre un dispositif de contrôle de l'optimiseur(2), l'optimiseur(2) calcule au plus juste la quantité d'énergie utile et en dialogue avec l'automate de régulation(3) décide du mode de fonctionnement des compresseurs .
- La supervision(4) permet de rentrer les consignes dans l'optimiseur(2), de visualiser en temps réel la consommation d'énergie de toute les voies, de tirer toutes les courbes et statistiques nécessaires à la meilleure gestion du dispositif et de provoquer des simulations pour l'amélioration du dispositif,
   elle permet également de dialoguer avec l'automate de régulation(3), de contrôler le bon fonctionnement des équipements de production de froid et de contrôler les actions de l'optimiseur(2) et leurs résultats dans la régulation,
   une fois les paramètres rentrés dans l'optimiseur(2) et l'automate de régulation(3), le dispositif peut fonctionner sans supervision(4).

Ce mode de fonctionnement entraîne une économie d'énergie de 10% sur la production de froid et, ou la production de chaud tout en améliorant le rendement des compresseurs.
L'optimiseur(2) envoie directement des ordres de délestage sur les appareils de cuisson et, ou le chauffage électrique et l'éclairage (sans ou avec gradateur)(6).

Seul les les optimiseurs (et non les Automates Programmable Industriels: API) ont la capacité de calcul d'intégration de mesure de la consommation d'énergie électrique en temps réel à la seconde et pouvant se caler sur l'algorithme de comptage du fournisseur d'énergie électrique soit toutes les dix minutes (pour un tarif vert en France) et en tenant compte de l'antériorité 10 minutes (calcul par anticipation de la réduction des débits d'énergie).

L'optimisation et la régulation d'énergie des installations en service démarre dès la première seconde de la séquence de comptage, la base de temps pour toute la séquence de mesure et d'optimisation est la seconde.

Permettant ainsi avec l'association d'un automate de régulation(3) : d'abaisser la puissance souscrite ,et d'abaisser la puissance consommée sur des sites de consommation électrique ou il y a transformation de l'énergie électrique en énergie mécanique sans risque de casse des équipements tout en respectant les process et le confort de l'exploitant.

Ce schéma de gestion de l'énergie électrique (figure 2) s'applique plus particulièrement à l'hypermarché, où la consommation énergétique du froid alimentaire représente 35% de la consommation annuelle.
Le froid alimentaire de la distribution commerciale représente en France 1,3% de la consommation intérieur du pays, où 5% de la consommation du secteur tertiaire du pays.

L'association des différentes composantes selon le schéma de la figure 2 permet , dans un hypermarché ou dans un centre commercial de gérer tout les postes énergétiques dont les poids de consommation à titre indicatif sont les suivants:
Production de froid alimentaire(35%),climatisation(20%),boulangerie(5%),rotisserie(3%),éclairage (20%).
On obtient ainsi un abaissement de 10% de la puissance souscrite du fournisseur d'énergie électrique et de 17% de la puissance consommée annuelle.
La consommation moyenne d'un hypermarché (donnée 1995) était de 850 kw/h par an par m2; il y a plus de 1000 hypermarchés en France.

Ce procédé peut s'inscrire comme action dans le domaine du Développement Durable.

Les dessins annexés illustrent l'invention :
La figure 1 représente le dispositif de gestion d'énergie électrique des équipements de production de froid ou chaud
La figure 2 représente le dispositif de Gestion Intégrale d'Energie Electrique (GIEE) des équipements d'un site industriel tertiaire en intégrant la figure 1

## Revendications

1. Dispositif permettant la gestion de l'énergie électrique des équipements de production de froid, et,ou de climatisation,et,ou de cuisson,et, ou d'éclairage,et, ou de chauffage **caractérisé en ce qu'**il comporte l'association d'un optimiseur(2), d'un automate de régulation(3), d'une supervision(4), d'un comptage électronique(1)

2. Dispositif selon la revendication 1 **caractérisé en ce que** l'optimiseur(2) intègre 2 voies de comptage sur le compteur(1) d'énergie(active et réactive) du fournisseur d'électricité calée sur l'algorithme du comptage(1) en temps réel à la seconde via le compteur (1) ,7 voies de comptage en temps réel à la seconde pour la production de froid(5), la climatisation(6), l'éclairage, la boulangerie, la rôtisserie, le chauffage(7), le groupe électrogène,
l'optimiseur(2) gère le débit d'énergie et, ou empêche le redémarrage des équipements selon l'inertie et les priorités de fonctionnement, directement aux équipements de cuisson, d'éclairage et de chauffage(6), pour la production de froid et la climatisation(5),l'optimiseur envoie ses ordres au travers de l'automate de régulation de froid et de climatisation, il peut y avoir un automate pour le froid et un automate pour la climatisation,
la base de temps et d'intégration de ces séquences est la seconde, l'optimisation et la régulation d'énergie des installations en service démarre dès la première seconde et jusqu'à la dernière seconde de la séquence de comptage.
les séquences d'optimisation sont fonctions de la charge instantanée mesurée et la charge à venir en tenant compte du mode de fonctionnement et de régulation des installations optimisées,
dans une séquence de comptage(1) 10 minutes, ou 5 minutes, ou 1 minute en fonction de la tarification du fournisseur d'énergie électrique, le fonctionnement de l'optimiseur(2) et de l'automate de régulation(3) sont indissociables pour la gestion des équipements de production de froid ou de chaud, par une programmation réciproque bien déterminée.

3. Dispositif selon la revendication 2 **caractérisé en ce que** l'automate de régulation(3) exécute les ordres émis par l'optimiseur(2) mais reste maître dans le pilotage des centrales et intègre un dispositif de contrôle de l'optimiseur(2), l'optimiseur(2) calcule au plus juste la quantité d'énergie utile et en dialogue avec l'automate de régulation(3) décide du mode de fonctionnement des compresseurs.

4. Dispositif selon la revendication 1 **caractérisé en ce que** la supervision(4) permet de rentrer les consignes dans l'optimiseur(2), de visualiser en temps réel la consommation d'énergie de toute les voies, et, ou de tirer toutes les courbes et, ou les statistiques nécessaires à la meilleure gestion du dispositif ,de provoquer des simulations pour l'amélioration du dispositif,
elle permet également de dialoguer avec l'automate de régulation(3), de contrôler le bon fontionnement des équipements de production de froid et, ou de chaud et de contrôler les actions de l'optimiseur(2) et leurs résultats dans la régulation,
une fois les paramètres rentrés dans l'optimiseur(2) et l'automate de régulation(3), le dispositif peut fonctionner sans supervision(4).
